# EUROPÄISCHE PATENTANMELDUNG

(11) **EP 4 653 174 A1**
(43) Veröffentlichungstag der Anmeldung: **26.11.2025**
(21) Anmeldenummer: 25172517.2
(22) Anmeldetag: 25.04.2025
(51) Int. Cl.: B29C 49/42, B29C 49/46, B65G 47/86, F24F 3/167, B29C 49/12, B29C 49/36, B29C 49/24, B29C 49/78, B29L 31/00, B65B 55/02, B65B 55/10, B67C 7/00, B67C 3/22

(54) **TRANSFERVORRICHTUNG ZUM KONTAMINATIONSFREIEN TRANSPORT VON BEHÄLTERN IN EINER VORRICHTUNG ZUM BEHANDELN VON BEHÄLTERN**

(30) Priorität: 21.05.2024 DE 102024114044
(71) Anmelder: KHS GmbH, 44143 Dortmund (DE)
(72) Erfinder: Gerhards, Martin, 44143 Dortmund (DE); Herold, Thomas, 44143 Dortmund (DE); Vetter, Elke, 44143 Dortmund (DE)
(74) Vertreter: Eisenführ Speiser

(57) **Zusammenfassung**

Die vorliegenden Erfindung betrifft eine Transfervorrichtung (T) zum kontaminationsfreien Transport von Behältern (B) aus einem thermoplastischen Material im Bereich einer Vorrichtung zum Behandeln von Behältern, insbesondere einer Umformmaschine, z.B. Streckumformmaschine oder Streckblasmaschine (10) zur Umformung von Behältern (B), wobei die Transfervorrichtung (T) eine auf einer Basis (12) beweglich gelagerte Transporteinrichtung (7) mit mehreren, an ihrem Umfang in Umfangsrichtung verteilt angeordneten Behälterträgern (8) zum Halten und Befördern der Behälter (B) entlang eines Transportpfades aufweist, wobei die Transfervorrichtung (T) eine Trennwand (11) umfasst, die sich in horizontaler Richtung entlang eines Transportpfades der Behälter (B) auf der Transfervorrichtung (T) und in vertikaler Richtung von oben nach unten von der Transporteinrichtung (7) mindestens bis zum unteren Ende (5, 113) des längsten Behälters (B) erstreckt, der auf der Transfervorrichtung (T) befördert wird, wobei die Trennwand (11) zwischen der Basis (12) und den Behältern (B) angeordnet ist und sowohl von der Basis (12) als auch vom Transportpfad beabstandet ist, wobei die Trennwand (11) derart eingerichtet ist, dass sie in dem von der Trennwand (11) abgedeckten Bereich einen Transport der Behälter (B) unter sterilen Bedingungen unterstützt, insbesondere verhindert, dass sich Fremdpartikel, Schmutz, Keime und/oder Mikroorganismen von der Transfervorrichtung (T) lösen und zu den Behältern (B) gelangen.

## Beschreibung

Die vorliegende Erfindung betrifft eine Transfervorrichtung, wie bspw. ein Transferrad, zum kontaminationsfreien Transport von Behältern in einer Vorrichtung zum Behandeln von Behältern, insbesondere in einer Umformmaschine, z.B. Streckblasmaschine.

Bekannt ist die Herstellung von Behältern durch Blasformen aus Vorformlingen aus einem thermoplastischen Material, beispielsweise aus Vorformlingen aus PET (Polyethylenterephthalat). Dabei werden die Vorformlinge innerhalb einer Blasformmaschine als einer Art einer Vorrichtung zur Behandlung von Behältern unterschiedlichen Bearbeitungsstationen zugeführt. Typischerweise weist eine Blasformmaschine eine Heizvorrichtung zum Temperieren bzw. zum thermischen Konditionieren der Vorformlinge sowie eine Blaseinrichtung mit wenigstens einer Blasstation auf, in deren Bereich der jeweils zuvor temperaturkonditionierte Vorformling zu einem Behälter expandiert wird. Im vorliegenden Kontext stehen Streckblasmaschinen im Vordergrund, bei denen der Vorformling mittels einer Reckstrange während des Expandierens gereckt wird.

Unter einem Behälter wird im vorliegenden Kontext nicht nur ein fertiger Behälter verstanden, sondern auch ein Vorformling, aus dem der fertige Behälter hergestellt wird. Für die vorliegende Anmeldung steht der Begriff "Behälter" also gleichermaßen für Vorformlinge und für daraus hergestellte fertige Behälter.

Möglichkeiten der Temperierung der Vorformlinge sind beispielsweise in der DE 23 52 926 A1 erläutert. Unter Temperierung oder thermischer Konditionierung wird dabei verstanden, dass der Vorformling auf eine für die Umformung geeignete Temperatur erwärmt und dem Vorformling ggf. ein Temperaturprofil in Längsrichtung und/oder in Umfangsrichtung aufgeprägt wird.

Vor einer Durchführung der Beheizung werden die Vorformlinge typischerweise auf Transportdorne aufgesteckt, die den Vorformling entweder durch die gesamte Umformmaschine, Z.B. Umformmaschine, Z.B. Blasmaschine transportieren oder die lediglich im Bereich der Heizeinrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Die Expansion in den fertigen Behälter erfolgt beispielsweise mit Hilfe eines Druckgases, insbesondere Druckluft, als Druckmedium, das mit einem Formdruck in den zu expandierenden Vorformling eingeleitet wird. Der verfahrenstechnische Ablauf bei einer derartigen Expansion des Vorformlings wird in der DE 43 40 291 A1 erläutert. Der grundsätzliche Aufbau einer Blasstation ist in der DE 42 12 583 A1 beschrieben. Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es ist jedoch auch möglich, Behälter aus Vorformlingen herzustellen und dabei gleichzeitig mit einem Füllgut zu befüllen, welches als hydraulisches Druckmedium zum Expandieren des Vorformlings bzw. zum Ausformen des Behälters mit einem Form- und Fülldruck zugeführt wird. Dadurch wird zeitgleich mit dem Füllen der jeweilige Vorformling in den Behälter umgeformt. In Fachkreisen sind solche Verfahren und Vorrichtungen zum gleichzeitigen Umformen und Befüllen von Vorformlingen in Behälter unter den Bezeichnungen "FormFill" oder "LiquiForm" bekannt. Die vorliegende Erfindung lässt sich vorteilhaft auf beide genannten Umformverfahren und beide Arten von Vorrichtungen zum Umformen von Vorformlingen anwenden. Für beide Arten von Vorrichtungen wird mit Vorteil eine Reckstange eingesetzt.

Unter einem Sterilisieren (auch Sterilisation) wird vorliegend verstanden, dass z.B. unter Verwendung chemischer Sterilisierfluide eine keimtötende Behandlung erfolgt. Die vorliegende Offenbarung ist unter dem Aspekt zu sehen, dass z.B. keimempfindliche Getränke unter aseptischen bzw. sterilen Bedingungen abgefüllt werden müssen, um die gewünschte Haltbarkeit zu erreichen. Dies setzt z.B. voraus, dass die Behälter, in die die Getränke abgefüllt werden, diese Sterilbedingungen erfüllen, also mindestens auf den füllgutberührten Oberflächen weitgehend keimfrei sind, derart dass eine Sterilisierungsbehandlung durchgeführt wurde, um Keime bzw. Mikroorganismen abzutöten. Zu diesem Zweck können fertige Behälter vor der Befüllung oder Vorformlinge vor ihrer Umformung in Behälter sterilisiert werden. So können sowohl die Vorformlinge als auch später die daraus hergestellten Behälter sterilisiert werden. Die Sterilisierung des Vorformlings hat gegenüber der Sterilisierung des daraus hergestellten Behälters den Vorteil, dass die zu sterilisierende Oberfläche viel kleiner ist, so dass die einzusetzende Menge an Sterilisierfluid geringer ausfallen kann. Nach der Sterilisierung der Behälter ist dann eine Neuverkeimung möglichst zu verhindern.

Aus der DE 10 2014 010 283 A1 ist z.B. bekannt, einen Vorformling mit einem Sterilisierfluid zu durchspülen, während der Vorformling bereits in der Umformstation aufgenommen ist. Ebenso ist es bekannt, einen Vorformling vor dem Erreichen der Umformstation einer Sterilisierung zu unterziehen (WO 2010/020530 A1), z.B. auf dem Weg zwischen der Heizvorrichtung und der Umformstation, oder z.B. vor dem Einlaufen des Vorformlings in die Heizvorrichtung einer Blasformmaschine, oder z.B. vor einem Einlauf eines Vorformlings in eine Blasformmaschine, z.B. im Bereich einer Zuführschiene für die Vorformlinge. Aus der EP 2 588 295 A1 ist auch bekannt, einen Vorformling innerhalb der Heizvorrichtung zu sterilisieren.

Eine bekannte Vorgehensweise bei der Sterilisation von Vorformlingen ist z.B., dass Wasserstoffperoxid (H₂O₂) in den Vorformling dosiert, der Vorformling zusammen mit dem dosierten Wasserstoffperoxid in der Heizvorrichtung erwärmt und im Anschluss ein fertiger Behälter geblasen wird. Dabei zerfällt der überwiegende Teil des eingesetzten Wasserstoffperoxids in Sauerstoff und Wasser. Bekannt ist aber auch, die Zudosierung von Wasserstoffperoxid zwischen der Heizvorrichtung und der Umformvorrichtung vorzusehen. Bei Entspannung auf Umgebungsdruck wird der fertige Behälter mit dem 25- bis 30-fachen des Flaschenvolumens gespült und damit etwaig verbliebenes Wasserstoffperoxid auf einen tolerierbaren Wert abgesenkt. Entsprechend kann Sterilisationsfluid, wie Wasserstoffperoxid, auch auf die Außenseite der Vorformlinge aufgebracht werden.

Es ist bekannt, eine Behandlung von Behältern, insbesondere einen Umformvorgang, in dem Vorformlinge zu Behältern umgeformt werden, unter sterilen Bedingungen durchzuführen. Dazu wird typischerweise ein Reinraum verwendet, innerhalb dessen die Behandlung der Behälter erfolgt, z.B. deren Herstellung durch Umformung.

Es ist auch bekannt, einen Teilraum innerhalb einer Umformmaschine, z.B. Blasmaschine, zu einem Reinraum zu machen, wobei sich dieser Teilraum möglichst auf diejenigen Bereiche beschränkt, in denen die Behälter geführt und behandelt werden. Einen solchen Stand der Technik zeigt z.B. die WO 2010/020529 A2, die Blasmaschinen betrifft, insbesondere solche mit Verwendung einer Reckstange, also eine Streckblasmaschine, und insbesondere Maschinen rotierender Bauart. Aufgrund dieser rotierenden Bauart gibt es stationäre Reinraumwände und sich mit dem Blasrad mitbewegende Reinraumwände, sowie dazwischen angeordnete Dichtungen. In diesem Stand der Technik ist auch beschrieben, dass zur Sterilhaltung innerhalb des Reinraums ein Sterilgas vorgesehen ist und dass dieses Sterilgas unter einem Druck steht, der höher ist als ein Druck außerhalb des Reinraums. Erwähnt ist auch, dass optional zur Sterilhaltung dem Reinraum kontinuierlich ein antimikrobieller Wirkstoff zugeführt wird. Es ist dort auch erwähnt, dass sich der besagte Reinraum bis zu einer der Blasmaschine, nachgelagert angeordneten Füllmaschine und bevorzugt bis in den Bereich einer Verschließeinrichtung zum Verschließen der gefüllten Behälter erstreckt. Diese WO 2010/020529 A2 beschreibt auch Möglichkeiten zur Sterilisierung der Vorformlinge.

Üblicherweise ist nach dem Blasformvorgang eine Spülung mit einem sterilen Spülfluid vorgesehen, um den fertigen Behälter von den Spuren des Sterilisierfluides zu befreien. Dies ist bspw. in der WO 2014/139624 A1 beschrieben. Der Blasformvorgang selbst führt bereits zu einem Spüleffekt, denn das verwendete Blasgas und das Ablassen des verwendeten Blasgases trägt zum Entfernen des Sterilisierfluides bei, soweit dieses noch vor der Umformung im Vorformling enthalten ist. Auch kann ein Sterilisierfluid, z.B. Wasserstoffperoxid, zerfallen und ist somit nicht mehr im Vorformling oder dem Behälter enthalten.

Unter einer Behandlung von Behältern wird neben der schon genannten Umformung von Vorformlingen, die auch als Behälter verstanden werden, auch z.B. das Befüllen, Verschließen, Etikettieren, Sterilisieren, Reinigen, etc. verstanden. Dieses insoweit für ein Behandeln zu verlangende Einwirken muss aber nicht mit einer Veränderung des Behälters einhergehen, sondern dieses Einwirken kann z.B. auch ein Inspizieren eines Behälters sein für eine Entscheidung, ob der Behälter auszuschleusen ist. Dieses Einwirken kann auch ein Vermessen des Behälters sein, z.B. um die erhaltenen Messwerte für eine Steuerung oder für eine Auswertung zu verwenden. Unter einem Behandeln wird aber nicht ein reiner Transport verstanden.

Transfervorrichtungen, insbesondere Transferräder sind bspw. in der WO 2017 140330 A1 offenbart. Eine Handhabung von Behältern unter Verwendung von Transfervorrichtungen, wie Transferrädern (auch Übergaberädern), wird beispielsweise in der DE 199 06 438 für die Anordnung des Übergaberades zwischen einem Blasrad und einer Ausgabestrecke beschrieben. Hier weisen die Transferräder mehrere Tragarme auf, welche Handhabungseinrichtungen tragen. Die Transfervorrichtungen bzw. Transferräder sind eingangsseitig und ausgangseitig einer Umformmaschine und zwischen unterschiedlichen Behälterbehandlungsmaschinen angeordnet, um den Transfer von einer ersten Behälterbehandlungsmaschine zu einer zweiten Behälterbehandlungsmaschine zu realisieren. Die Transfervorrichtung (Transferräder) können aber auch innerhalb einer Behälterbehandlungsmaschine angeordnet sein, zum Beispiel um Vorformlinge oder daraus hergestellte Behälter von einer Behandlungsstation zu einer nächsten Behandlungsstation zu transferieren (z.B. von einer Heizeinrichtung zu einer Blaseinrichtung). Denkbar ist auch, dass diese Transferräder mit einer über den Transport hinausgehenden Funktion ausgestattet sind. So können zum Beispiel auf dem Transferrad Mittel zum Ausschleusen angeordnet sein, um als fehlerhaft von Inspektionsmitteln ermittelte Vorformlinge oder daraus hergestellte Behälter auszuschleusen. Auf den Transfervorrichtungen (Transferrädern) können auch Messmittel angeordnet sein, um basierend auf den durch diese durchgeführten Messungen die Steuerung der Behandlungsmaschine vorzunehmen. So können bspw. Wanddickenmessmittel oder Temperaturmessmittel vorgesehen sein oder beliebige andere Messmittel, die eine Eigenschaft des Vorformlings oder des daraus hergestellten Behälters erfassen, um die erfassten Werte einer Steuerungseinheit zum Zwecke der Maschinensteuerung und/oder zum Zwecke der Umformprozesssteuerung zuzuführen.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Aus der DE102015121530A1 sind Transfervorrichtungen bekannt, die für einen hängenden Transport der Behälter ausgebildet sind. Sie weisen am Umfang eines um eine vertikale Maschinenachse umlaufend antreibbaren sternradartigen Rotors oder Transportrades eine Vielzahl von Behälterträgern (Behälteraufnahmen), beispielsweise in Form von Greifern, Klammern usw. auf, und zwar für die hängende Halterung der Behälter, insbesondere der als Flaschen ausgebildeten Behälter an einem Flansch (Halsring oder Neckring), der am Flaschenhals angeformt ist.

Die vorliegende Offenbarung stellt eine Transfervorrichtung zum kontaminationsfreien Transport von Behältern bereit. Die Behälter sind vorteilhaft aus einem thermoplastischen Material. Die Transfervorrichtung kann bspw. im Bereich einer Vorrichtung zum Behandeln von Behältern, wie bspw. einer Umformmaschine, z.B. Blasmaschine bzw. Streckblasmaschine zur Umformung bzw. Blasformung von Behältern angeordnet sein. Die Transfervorrichtung kann aber auch in anderen Vorrichtungen zum Behandeln von Behältern genutzt werden. Im Vordergrund steht die Eigenschaft der hier beschriebenen Transfervorrichtung, die Kontamination bzw. erneute Kontamination der Behälter mit Mikroorganismen (inkl. Viren) oder Schmutzpartikeln zu verhindern. Die erfindungsgemäße Transfervorrichtung unterstützt einen Transport der Behälter unter möglichst sterilen und reinen Bedingungen, d.h. die Transfervorrichtung ermöglicht es insbesondere ein Eindringen von Fremdpartikeln, Schmutz, Mikroorganismen und/oder allgemein von Keimen in die sterilen Behälter zu vermeiden. Hierzu weist die Transfervorrichtung eine Trennwand (oder auch Abdeckung) auf, die nachfolgend genauer beschrieben ist.

Die Transfervorrichtung weist allgemein eine auf einer (festen) Basis (Trägerkonstruktion) beweglich gelagerte Transporteinrichtung (bspw. Transportrad, Rotor, Stern) auf. Die Basis ist eingerichtet, um die ganze Transfervorrichtung, und insbesondere die Transporteinrichtung, zu tragen. Bei der Basis kann es sich um einen Sockel, einen Pfosten, eine Säule, ein Rohr oder andere ggf. auch komplexere Strukturen handeln. Die Transporteinrichtung kann an oder auf der Basis vorzugsweise um eine zentrale Drehachse oder Rotationsachse drehbar gelagert sein. Bei der Transporteinrichtung kann es sich vorzugsweise um ein Transportrad, einen Rotor, einen Stern oder eine rotorartige bzw. sternartige Anordnung einer Mehrzahl von Behälterträgern mit Tragarmen (Greifarmen, Greifer) bzw. Trageinrichtungen für Behälter handeln.

Die Basis der Transfervorrichtung kann eine oder mehrere Kurvensteuerungen bzw. Kurven umfassen, die eingerichtet sind, um die Transporteinrichtung bzw. die Behälterträger, insbesondere Greifarme und/oder Greifer der Transporteinrichtung zu steuern. Die Kurven sind dabei fest mit der Basis verbunden und daher gegenüber einer Transportbewegung stationär. Die Kurven können oberhalb, unterhalb und/oder seitlich der beweglichen Transporteinrichtung bzw. der Behälterträger angeordnet sein. Ganz gleich, ob die Kurvensteuerung an der Oberseite der Transfervorrichtung angeordnet ist oder sich in der Basis bzw. Trägerkonstruktion der Transfervorrichtung befindet, kann es grundsätzlich eine oder mehrere Kurven bzw. Kurvensteuerungen geben. Zum Beispiel eine erste für das Schwenken von Greifarmen der Transporteinrichtung, eine zweite für das Teleskopieren der Greifarme und eine dritte für das Öffnen und Schließen der Greifer an den Greifarmen.

Unabhängig von ihrer Ausgestaltung weist die Transporteinrichtung also vorteilhaft eine Mehrzahl von an ihrem Umfang in Umfangsrichtung verteilt angeordnete Behälterträger (bspw. Greifer, Aufnahmeeinrichtungen, Aufnahmerezesse, Klemmen, Dorne) auf, die zum Halten und Befördern der Behälter entlang eines Transportpfades der Behälter um die Transporteinrichtung (bzw. um die Transfervorrichtung) eingerichtet sind.

Mit Vorteil umfasst die Transfervorrichtung eine entlang des Transportpfades der Behälter um die Transporteinrichtung verlaufende Trennwand. Die Trennwand kann aus Kunststoff, Metall oder einer Kombination dieser und anderer Materialien bestehen. Die Trennwand kann grundsätzlich auch mehrteilig sein, wobei die einzelnen Teile dann lückenlos nebeneinander angeordnet sind. In diesem Fall könnte man auch von mehreren Trennwänden sprechen die eine gesamte Trennwand bilden oder von den Gliedern einer einzigen Trennwand.

Die Trennwand erstreckt sich in vertikaler Richtung von oben nach unten bzw. von unten nach oben und reicht von einer Unterkante der Transporteinrichtung mindestens bis zur Unterkante des längsten Behälters, der auf der Transfervorrichtung befördert wird. Dabei wird allgemein von einer vertikalen Ausrichtung der Behälter während des Transports ausgegangen.

In einer vorteilhaften Ausgestaltung kann die Trennwand (oder die Trennwände bzw. Glieder der Trennwand bei einer mehrteiligen Ausführung der Trennwand) an ihrer Oberseite gegenüber einer Bewegung der Transporteinrichtung bzw. einer Bewegung der Behälter entlang dem Transportpfad fest und stationär mit der Basis verbunden sein. Die Trennwand oder Trennwände können dann bspw. von oben nach unten bis zu einer Unterkante der zu transportierenden Behälter (fertige Behälter oder Vorformlinge) reichen. Zwischen der Oberkante der Transporteinrichtung und der Trennwand oder den Gliedern der Trennwand können dann Dichtungen angeordnet sein, die möglichst undurchlässig für Schmutz, Mikroorganismen (inkl. Viren) sein sollten.

Die Trennwand kann sich auch von einer Unterkante der Transporteinrichtung bis zum Boden erstrecken und kann mit Vorteil ebenfalls fest, also stationär, mit der Basis und/oder dem Boden verbunden sein. Der Begriff "Boden" bezeichnet im vorliegenden Kontext einen Träger bzw. die Ebene eines Trägers auf dem die Transfervorrichtung, insbesondere die Basis der Transfervorrichtung fest installiert ist. Dabei muss dieser Boden nicht zwangsläufig völlig eben sein. Es könnte sich auch um einen zusätzlichen Boden handeln, der zu diesem Zweck eingezogen oder aufgestellt (Zwischenboden, Aufstellboden) wird.

Die Trennwand oder deren Glieder oder Teile können von oben nach unten reichen und fest mit der Transporteinrichtung verbunden sein und sich mit dieser mitbewegen. Die Trennwand reicht dabei vorteilhaft immer mindestens bis zur Unterkante der Behälter oder Vorformlinge auf ihrem Transportpfad entlang der Transfervorrichtung. Wenn die Trennwand länger ist kann zwischen dem Boden und der Unterkante der Trennwand ein Spalt verbleiben. Dort kann sich eine geeignete Dichtung (auch Labyrinth) befinden.

Ferner können die Behälter beim Transport vorteilhaft mit der Mündungsöffnung nach oben ausgerichtet sein. Soweit sich die Transporteinrichtung (bspw. Transportrad) und/oder die Behälterträger oberhalb der Behälter befinden, ist die Trennwand vorzugsweise mindestens überwiegend unterhalb der Transporteinrichtung angeordnet.

Die Trennwand kann vorteilhaft zwischen der Basis der Transfervorrichtung und den Behältern und unterhalb der Transporteinrichtung angeordnet sein. Dabei kann die Trennwand bevorzugt sowohl von der Transfervorrichtung (bspw. deren Basis oder deren Rotationsachse) als auch vom Transportpfad bzw. von den Behältern auf ihrem Weg entlang ihres Transportpfades beabstandet sein. Die Trennwand kann vorteilhaft generell zumindest abschnittweise oder vollständig entlang des Transportpfades der Behälter verlaufen.

Die Trennwand kann derart eingerichtet sein, dass sie in einem von der Trennwand abgedeckten Bereich verhindert, dass sich Partikel von der Transfervorrichtung lösen und zu den Behältern gelangen und diese kontaminieren können.

In einer weiteren Ausgestaltung kann sich die Trennwand in einer Transportrichtung (bspw. Umlaufrichtung, oder lineare Wegstrecken) der Behälter auf der Transfervorrichtung mitbewegen. Hierdurch wird eine fortwährend seitliche Abdeckung der Behälter gegenüber der Transfervorrichtung gewährleistet.

Wenn die Transfervorrichtung eine Transporteinrichtung aufweist, die als Transportrad, Rotor oder Stern oder ähnliches ausgestaltet ist, kann die bewegliche Lagerung eine Drehung bzw. Rotation um eine Drehachse bzw. Rotationsachse ermöglichen. In diesem Fall kann das Transportrad (bzw. Rotor oder Stern) bspw. Behälterträger in Form von Greifern oder Aufnahmeeinrichtungen aufweisen, die entlang des Umfangs des Transportrades (bzw. Rotors, Sterns) umfangsbeabstandet verteilt sind. Diese Behälterträger oder Halteeinrichtungen dienen, wie zuvor erläutert, zum Halten und Befördern der Behälter durch die Transfervorrichtung und dort entlang eines Transportpfades. Der Transportpfad entlang der Transfervorrichtung ist dabei eine Wegstrecke entlang des Umfangs der Transporteinrichtung (bspw. Transportrad), typischerweise ein Teil des gesamten Umfangs der Transporteinrichtung. Der Transportpfad entlang der Transfervorrichtung kann dabei grundsätzlich alle möglichen Formen aufweisen. Zum Beispiel ist bei einer Transfervorrichtung mit Teilungsverzug der Transportpfad nicht kreisförmig, sondern folgt einer Kurvenspur. Die Trennwand kann dieser Kurvenspur folgen.

Wenn die Transporteinrichtung einen runden bzw. kreisförmigen Umfang aufweist oder die Behälterträger beim Transport auf einem solchen kreisförmigen Umfang liegen, dann ist der Transportpfad der Behälter entlang der Transfervorrichtung mit einer derartigen Transporteinrichtung eine Kreislinie bzw. ein Kreislinienabschnitt (auch Teilumfang). Die Trennwand kann in diesem Fall zylinderförmig sein und wenigstens abschnittweise Glieder oder Segmente mit geradem, gekrümmtem, rundem, oder sogar kreisrundem Querschnitt aufweisen. Die Trennwand bzw. die Gesamtheit der Glieder oder Segmente der Trennwand können die Basis der Transfervorrichtung, insbesondere im Fall einer stationären Trennwand, teilweise, oder auch vollständig umschließen. Im Falle einer stationären Trennwand, die sich nicht mit der Transporteinrichtung mitbewegt, kann die Trennwand die Transfervorrichtung bzw. deren Basis um bis zu 170°, 180° oder um bis zu 200° oder 270° umschließen. Dies gilt für rotatorische Transfervorrichtungen und lineare Transfervorrichtungen.

Die Trennwand (oder die Glieder der Trennwand) können mit einer Oberkante (bzw. einem oberen Ende) an einem Umfang der Transporteinrichtung, insbesondere am Umfang eines Transportrades (Rotor, Stern) befestigt sein. Die Trennwand kann dann vorteilhaft mit der Oberkante an einem Unterteil (oder Unterkante) der beweglichen Transporteinrichtung bzw. des Transportrades befestigt sein. Nach unten kann die Trennwand bzw. deren Glieder dann mittels Dichtungen beweglich mit dem Boden in Kontakt stehen.

Die Basis der Transfervorrichtung kann allgemein auch eine oder mehrere Säulen oder Pfosten umfassen, auf denen eine oder mehrere Transportreinrichtungen angeordnet sein können. Im Falle einer Rotation der Transporteinrichtung kann die Rotationsachse durch eine Säule verlaufen bzw. mit der Längsachse einer Säule oder eines Pfostens zusammenfallen.

Es ist auch vorstellbar, dass die Transfervorrichtung eine Welle umfasst, an der die Transporteinrichtung befestigt ist. In diesem Fall kann die Rotationsachse mit der Längsachse der Welle zusammenfallen. In der Basis kann sich ein Antrieb, insbesondere ein Servoantrieb bzw. Servomotor befinden, der die Transporteinrichtung antreibt.

Die Trennwand kann in allen Ausführungen zwischen der Basis, und den Behältern angeordnet sein. In diesem Fall kann die Trennwand sowohl von den Behältern als auch der Basis beabstandet sein.

Die vorliegende Offenbarung stellt auch eine Vorrichtung zum Behandeln von Behältern, insbesondere eine Umformmaschine, Z.B. Streckumformmaschine, Z.B. Blasmaschine oder Streckblasmaschine, bereit. Die Vorrichtung zum Behandeln von Behältern kann vorteilhaft eine Transfervorrichtung gemäß der vorliegenden Offenbarung und eine Vorrichtung zum Beaufschlagen der Behälter mit Sterilisierfluid umfassen. Die Vorrichtung zum Behandeln von Behältern kann vorteilhaft weitere Ausgestaltungen aufweisen, wie bspw. vorgegebenen Strömungen steriler Luft oder andere Maßnahmen, um einen möglichst kontaminationsfreien Transport der Behälter zu unterstützen.

Nachfolgend wird die Offenbarung anhand von bevorzugten Ausführungsbeispielen und anhand der beiliegenden Figuren näher erläutert. Die Zeichnungen sind nicht unbedingt maßstabsgetreu. In den Figuren sind gleiche oder im Wesentlichen funktionsgleiche bzw. -ähnliche Elemente üblicherweise mit den gleichen Bezugszeichen bezeichnet. Es zeigen:
- Fig. 1: eine stark vereinfachte schematische Darstellung einer Vorrichtung zum Behandeln von Behältern unter Sterilbedingungen am Beispiel einer Behandlungsvorrichtung zur Herstellung von fertigen Behältern aus Vorformlingen,
- Fig. 2: eine stark vereinfachte schematische seitliche Schnittdarstellung einer Transfervorrichtung gemäß einem Ausführungsbeispiel,
- Fig. 3: eine stark vereinfachte schematische perspektivische Darstellung einer Transfervorrichtung gemäß einem Ausführungsbeispiel und
- Fig. 4: eine stark vereinfachte schematische perspektivische Darstellung einer Transfervorrichtung gemäß einem weiteren Ausführungsbeispiel

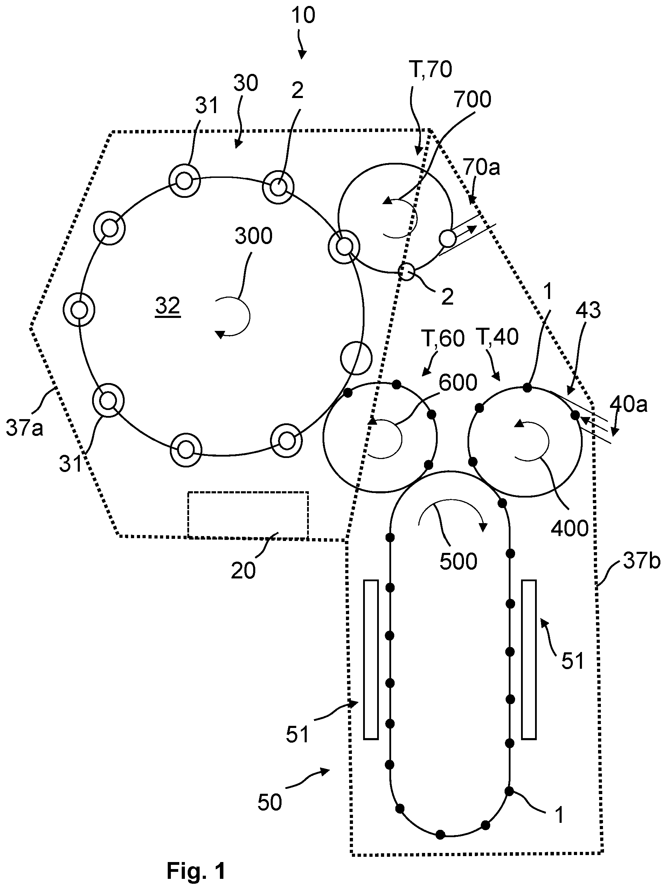

In der Darstellung in Fig. 1 ist eine Vorrichtung zum Umformen von Behältern B, hier also Vorformlingen 1, in einer schematischen Darstellung gezeigt. Hier - ohne Beschränkung der allgemeinen Anwendbarkeit der vorliegenden Erfindung - in einem konkreten Beispiel einer Vorrichtung zum Herstellen von fertigen Behältern B,2 aus thermisch konditionierten Vorformlingen B,1. Die Vorrichtung umfasst eine Blaseinrichtung 30, die in der hier gezeigten Ausführungsform eine Blaseinrichtung 30 rotierender Bauart mit einem Umformrad 32 und mit mehreren umfangsbeabstandet daran angeordneten Umformstationen 31 zum Umformen der Vorformlinge 1 in Behälter 2 ist. Im vorliegenden Ausführungsbeispiel kann es sich um eine Blaseinrichtung 30 handeln, die aus den Vorformlingen 1 die Behälter 2 durch Druckluft formt, oder eine Blaseinrichtung 30, die Behälter 2 durch Einbringen eines flüssigen Füllguts unter Druck formt, welches als hydraulisches Druckmedium zum Expandieren des Vorformlings 1 und/oder zum Ausformen des Behälters 2 zugeführt wird.

Entlang eines Transportpfades stromabwärts erfolgt der Transport der Vorformlinge 1 und Behälter 2 in der folgenden Weise. Über eine Zuführung 40a, z.B. ausgebildet als Zuführschiene oder als Luftförderer, werden die Vorformlinge 1 an ein Vereinzelungsrad 40 (z.B. erstes Transferrad, erste Transfervorrichtung T) übergeben, das sich drehangetrieben von einem nicht dargestellten Antrieb wie mit Pfeil 400 angedeutet dreht. Hier können zusätzlich weitere Transfervorrichtungen bzw. Transferräder vorgesehen sein, die dem Vereinzelungsrad 40 nachgelagert sind. In der dargestellten einfachen Ausführung werden die Vorformlinge 1 direkt mittels des Vereinzelungsrades 40 an eine Heizvorrichtung 50 übergeben, die entlang einer Heizstrecke Heizeinrichtungen 51 zum thermischen Konditionieren der Vorformlinge 1 aufweist. Die Vorformlinge 1 werden in der mit dem Pfeil 500 angedeuteten Umlaufrichtung (Transportrichtung) entlang der Heizeinrichtungen 51 bzw. entlang der entsprechenden Heizstrecken geführt und dann an das drehangetriebene Zuführrad 60 (z.B. zweites Transferrad, zweite Transfervorrichtung T) übergeben, das sich in Richtung des Pfeils 600 dreht. Von dem Zuführrad 60 (z.B. zweites Transferrad, zweite Transfervorrichtung T) werden die Vorformlinge 1 an die Blaseinrichtung 30 übergeben. Mittels der Umformstationen 31 werden aus den Vorformlingen 1 fertige Behälter 2 geformt. Nachdem die fertigen Behälter 2 aus den Vorformlingen 1 geformt wurden, werden diese an ein Ausgabe- oder Abführrad 70 (z.B. drittes Transferrad, dritte Transfervorrichtung T) übergeben, das sich in Richtung des Pfeils 700 dreht. Anschließend werden die Behälter 2 mittels einer Abführeinrichtung 70a abtransportiert. Die Behälter 2 können hier bspw. über weitere - nicht dargestellte - Transfervorrichtungen an eine Vorrichtung zum Befüllen der Behälter 2 weitergeleitet werden. Abtransportieren umfasst hier also allgemein die Weiterführung zu einer nächsten Behandlung, die in einem Füllen, Verschließen, Inspizieren oder anderem bestehen kann.

Die Vorformlinge 1 und Behälter 2 können beim Transport und ggf. bei einzelnen Behandlungsschritten mittels Transportdornen oder Greifern gehalten werden. In bekannter und daher nicht dargestellter Weise kann der Transport der Vorformlinge 1 durch die Heizvorrichtung 50 vorteilhaft von einer Dornenkette mit zu einer Endloskette verbundenen Transportdornen ausgeführt werden. Der Aufbau der Heizvorrichtung 50 ist grundsätzlich bekannt und daher hier nicht näher zu beschreiben.

Für die kontinuierliche Förderung der Vorformlinge 1 bzw. der Behälter 2 entlang eines Transportpfades durch die Gesamtvorrichtung der Figur 1 sind die genannten Umlaufbewegungen der genannten Transfervorrichtungen (Transferräder 40, 60, 70) der Blaseinrichtung 30 und der Heizvorrichtung 50 aufeinander abgestimmt, z.B. durch eine Synchronisierung und/oder durch einen gemeinsamen Antrieb. Der Transportpfad der Vorformlinge 1 bzw. der Behälter 2 ist dabei definiert durch den Transportweg jeweils entlang eines Teilumfangs der Transferräder 40, 60, 70 (erstes, zweites und drittes Transferrad), entlang eines Teilumfangs der Blaseinrichtung 30 und entlang eines Teilumlaufbereiches der Dornenkette. Die in Figur 1 dargestellte Aneinanderreihung der voneinander beabstandeten Vorformlinge 1 und Behälter 2 ausgehend vom Vereinzelungsrad 40 über die Heizvorrichtung 50, weiter über das Zuführrad 60, sich fortsetzend über die Blaseinrichtung 30, während sich die Vorformlinge 1 auf dem Umformrad 32 in fertige Behälter 2 umwandeln, sich weiter fortsetzend auf das Ausgaberad 70 und schließlich endend bei der Abführeinrichtung 70a entspricht diesem Transportpfad durch die dargestellte Gesamtanordnung. Im Kontext der vorliegenden Offenbarung sind das Vereinzelungsrad 40, das Transferrad 60 und das Ausgaberad 70 allgemein "Transfervorrichtungen" bzw. "Transferräder".

Die Umformstationen 31 der Blaseinrichtung 30 bestehen in bekannter Weise aus mehrteiligen äußeren Formen, gegen deren Innnenkontur die Vorformlinge 1 mittels Druckluft oder Füllgut expandiert werden. Mit gepunkteten Linien ist ein Maschinengehäuse 37a, 37b angedeutet.

Es gibt eine Steuereinheit 20 der Umformungsvorrichtung 30. Diese Steuereinheit 20 könnte auch die Steuerung der Heizvorrichtung 50 oder weitere Steuerfunktionen der Gesamtvorrichtung, wie bspw. die Steuerung der Transfervorrichtungen übernehmen. Denkbar ist aber auch, dass weitere Steuereinheiten vorgesehen sind, die diese weiteren Steuerungsfunktionen übernehmen.

Zur Sterilisierung der Behälter kann Sterilisierfluid zur Sterilisierung der Vorformlinge 1 vor oder beim Eintritt in die Heizvorrichtung 50 in den Innenraum des Vorformlings 1 eingebracht werden. Im Rahmen der vorliegenden Offenbarung kann das Aufbringen des Sterilisierfluides auf eine äußere Oberfläche des Vorformlings 1 und ggf. das Einbringen des Sterilisierfluides in das Innere bspw. etwa innerhalb einer in Fig. 1 nicht genauer dargestellten Beaufschlagungseinrichtung 43 erfolgen. Der Vorformling 1 kann nach dem Einbringen des Sterilisierfluides in das Innere mindestens teilweise und/oder zeitweise verschlossen werden, z.B. durch einen Transportdorn, der den Vorformling durch die Heizvorrichtung 50 führt. In einer möglichen Ausgestaltung erfolgt das Beaufschlagen des Vorformlings mit dem Sterilisierfluid in der Beaufschlagungseinrichtung 43 vor der Heizvorrichtung, d. h. die Beaufschlagungseinrichtung 43 wird von den Vorformlingen 1 durchlaufen, bevor diese in die Heizvorrichtung eintreten. Alternativ ist es auch möglich, dass die Vorformlinge 1 nach dem Durchlaufen der Heizvorrichtung sterilisiert werden. Die Sterilisierung kann grundsätzlich aber auch an anderen Positionen vorgenommen werden.

Nach der erfolgten Sterilisierung erfolgt bspw. eine Spülung der Vorformlinge 1 bzw. Behälter 2 mit einem sterilen Fluid. Das Spülfluid kann z.B. sterile Luft sein. Ebenso kommen als Spülfluid inerte Gase in Betracht, wie bspw. Stickstoff oder Kohlenstoffdioxid. Eine Möglichkeit für ein Spülfluid könnte auch Wasserdampf sein. Vorteilhaft kann das Spülfluid im Hinblick auf das spätere Füllgut gewählt werden, das ggf. für das Umformen zum Einsatz kommt. Bei einem karbonisierten Füllgut könnte z.B. Kohlenstoffdioxid als Spülfluid bevorzugt sein. In der Regel wird das Spülfluid gasförmig, also ein Spülgas sein. Der Spülschritt wird kann nach dem Verlassen der Heizvorrichtung ausgeführt werden.

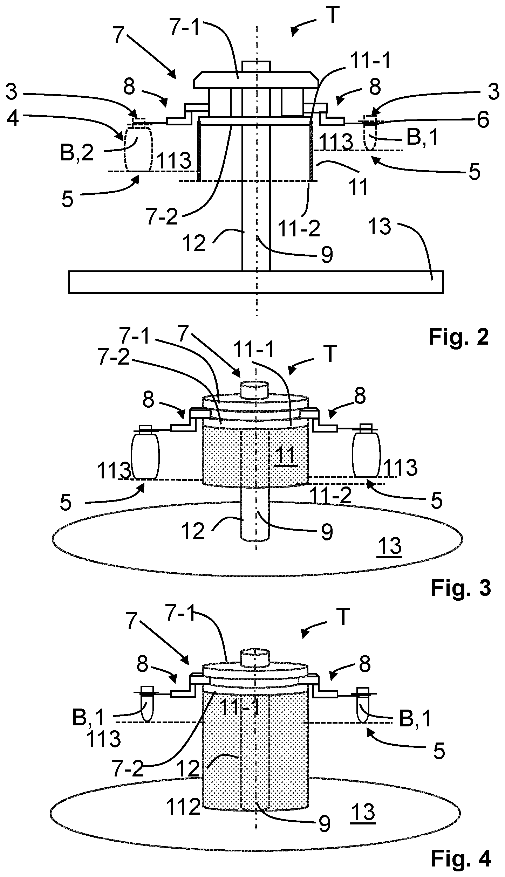

Fig. 2 ist eine stark vereinfachte schematische seitliche Schnittdarstellung einer Transfervorrichtung T gemäß einem Ausführungsbeispiel. Eine Transfervorrichtung T gemäß diesem Ausführungsbeispiel kann bspw. als Vereinzelungsrad 40, Zuführrad 60 oder Ausgaberad bzw. Abführrad 70 in der Vorrichtung zur Behandlung von Behältern 10 eingesetzt werden, wobei bevorzugt ein Einsatz als Zuführrad 60 oder Ausgaberad 70 in Betracht kommt, da die Behälter B in diesem Bereich bereits sterilisiert sein können.

Die Transfervorrichtung T ist beispielhaft als Transferrad ausgestaltet. Unterhalb der Transfervorrichtung T befindet sich ein Boden, Aufstellboden oder Sockel 13. Die Transfervorrichtung T umfasst eine Transporteinrichtung 7, die als Transportrad 7 ausgestaltet ist, das um eine Rotationsachse 9 drehbar auf einer Basis 12 (auch Trägerkonstruktion) gelagert ist. Die Basis 12 kann säulen- oder rohrstückartig, d.h. als Rohrstücke oder Rohrelemente (oder Säule oder Pfosten) ausgestaltet sein. Die Basis 12 kann eine Kurvensteuerung bzw. eine oder mehrere Kurven für die Steuerung der Transporteinrichtung 7 bzw. Behälterträger 8, wie bspw. Greifarme und Greifer der Transporteinrichtung 7 aufweisen. Die Kurven können oberhalb oder unterhalb der Transporteinrichtung 7 angeordnet sein. Die Kurven sind fest mit der Basis 12 und damit auch mit dem Boden 13 verbunden daher stationär. Die Basis 12 könnte allgemein auch eine Welle umfassen, die sich mit dem Transportrad 7 dreht. Entsprechend könnte die Basis 12 am Boden 13 drehbar gelagert sein. Die Transfervorrichtung T ist drehangetrieben, bspw. über Riemen oder Ketten oder einen integrierten Antrieb (Servomotor), die nicht gezeigt sind. Weitere mögliche Ausführungen bestehen aus elektromagnetischen Einzelantrieben (je ein Antrieb für ein Transportmittel), die unabhängig voneinander auf Führungsbahnen bewegt werden. Das Transportrad 7 weist in dieser stark vereinfachten Darstellung ein Oberteil 7-1 und ein Unterteil 7-2 auf. Zwischen dem Oberteil 7-1 und dem Unterteil 7-2 des Transportrades 7 sind entlang des Umfangs eine Mehrzahl von Behälterträgern 8 angeordnet, wobei hier beispielhaft nur zwei als Greifer ausgestaltete Behälterträger 8 gezeigt sind. Je nach Ausgestaltung könnte das Oberteil 7-1 oder das Unterteil 7-2 eine oder mehrere Kurven zur Steuerung der Behälterträger 8 umfassen. Entsprechend könnte das Oberteil 7-1 oder das Unterteil 7-2 stationär sein, oder sich mit den Behälterträgern 8 mitbewegen.

Ebenfalls nur beispielhaft ist links gestrichelt ein fertiger Behälter B,2 gezeigt und rechts gestrichelt ein Vorformling B,1. Die Transfervorrichtung T wird im Normalfall nur einen Typ der Behälter B transportieren. Die Behälter B,1 und B,2 weisen jeweils einen Mündungsbereich 3, einen Schaft 4 und einen Boden (Kuppe) 5 sowie einen Neckring 6 auf. Aufgrund der unterschiedlichen Größe der Behälter B,1 und B,2 sind die jeweiligen Unterkanten bzw. unteren Enden 113 der Behälter B,1 und B,2 unterschiedlich tief.

Die Transfervorrichtung T weist eine Trennwand 11 auf, die sich in vertikaler Richtung von oben nach unten von der Transporteinrichtung 7 mit einer Unterkante 11-2 mindestens bis unterhalb der tiefsten Unterkante 113 der Behälter erstreckt. Eine Oberkante bzw. ein oberes Ende 11-1 der Trennwand reicht bis an das Unterteil 7-2 der Transporteinrichtung 7. Dieses Unterteil 7-2 kann stationär sein oder sich mit der Transproteinrichtung bzw. den Behälterträgern mitbewegen. Entsprechend kann die Trennwand 11 stationär sein oder sich mit den Behälterträgern 8 mitbewegen.

In einer weiteren möglichen Ausgestaltung kann die Trennwand 11 mit einem unteren Ende/Unterkante 11-3 auch bis zum Boden 13 reichen. Die zweite Ausgestaltung ist gestrichelt bezüglich der Trennwand 11 eingezeichnet. In der zweiten Ausgestaltung, also wenn die Trennwand 11 mit der Unterkante 11-3 bis zum Boden 13 reicht, kann diese fest am Boden 13 befestigt und somit stationär gegenüber der Transporteinrichtung 7 bzw. den Behälterträgern 8 und den Behältern B,1 und B,2 sein. In diesem Fall reicht die Trennwand 11 vorteilhaft vom Boden 13 (Oberfläche des Bodens 13) bis zu einer Unterkante des Unterteils 7-2 der Transporteinrichtung 7. Je nachdem, ob das Unterteil 7-2 stationär oder beweglich ist, kann zwischen der Trennwand 11 und der Unterkante des Unterteils 7-2 der Transporteinrichtung 7 eine feste oder bewegliche Dichtung angeordnet sein, die im zweiten Fall eine Bewegung der Transproteinrichtung 7 gegenüber der Trennwand 11 ermöglicht.

In allen Fällen kann die Trennwand 11 (in vertikaler Richtung) mit einem unteren Ende 11-2 mindestens bis knapp unterhalb des längstens Behälters B,1/B,2 reichen bzw. diesen überragen. Auch bei dieser zweiten Ausführung kann die Trennwand 11 mit einer Unterkante 11-3 bis zum Boden 13 reichen.

Für den Fall einer beweglichen Trennwand 11 wird ein Spalt zwischen der Unterkante 11-3 und der Oberfläche des Bodens 13 bleiben, der eine Bewegung zwischen der Trennwand 11 und dem Boden 13 ermöglicht. Im Spalt können sich entsprechende Dichtungen befinden.

Fig. 3 ist eine stark vereinfachte schematische perspektivische Darstellung einer Transfervorrichtung T gemäß einem Ausführungsbeispiel. Es entspricht dem Ausführungsbeispiel der Fig. 2, bei dem die Trennwand 11 nicht bis zum Boden 13 reicht, sondern lediglich die Behälter B1, B,2 nach unten überragt. Die Trennwand 11 kann stationär sein oder sich mit der Transporteinrichtung 7 bzw. den Behälterträgern 8 und den Behältern B,1/B,2 mitbewegen. In dieser Darstellung ist aufgrund der perspektivischen Darstellung, die zylindrische Form der Trennwand 11 zu erkennen ist. Allerdings handelt es sich bei der Trennwand 11 nicht zwangsläufig um einen Zylinder oder Kreiszylinder, wie es die Darstellung andeutet. Vielmehr kann die Trennwand 11 allgemein alle möglichen Formen annehmen. Die Trennwand 11 könnte auch zylindrisch sein, wobei der Querschnitt der Mantelfläche alle möglichen Formen annehmen kann. Beispielsweise kann der Querschnitt ein Polygon sein oder beliebige gekrümmte oder runde Teilbereiche aufweisen. Die Trennwand kann allgemein auch aus mehreren unterschiedlichen Elementen, Gliedern oder Segmenten bestehen, wobei diese zu einer ausreichend geschlossenen Trennwand 11 zusammengefügt sein sollten. Zudem sind hier beispielhaft nur fertige Behälter B,2 gezeigt, die von den Greifern 8 oberhalb des Neckrings 6 getragen werden. Ebenso könnten es sich hier um Vorformlinge B,1 handeln. Die Behälter B,2 (oder B,1) vollziehen im Betrieb eine Drehung um einen Teilumfang der Transporteinrichtung 7 und zwar von einer Aufnahmeposition zu einer Abgabeposition der Behälter B,2 (oder B,1). Die Trennwand 11 befindet sich zwischen der Basis 12 und einem Transportpfad der Behälter B,2 und erstreckt sich in horizontaler Richtung entlang eines Transportpfades der Behälter B. Im vorliegenden Fall umschließt die Trennwand 11 die Basis 12 vollständig, wobei die Basis 12 in Form einer Maschinenachse hat. Im Falle einer stationären Trennwand 11 ist es vorteilhaft möglich, die Trennwand 11 nur einen Teil des Transportpfades abdecken zu lassen. Wenn der komplette Umlauf (auch bei linearen Transfervorrichtungen) 360° entspricht, so könnte die Trennwand nur den Bereich abdecken, in dem die Behälter oder Vorformlinge B,1,2 von der Transfervorrichtung geführt werden. Das könnten dann weniger als 360° sein, bspw. nur bis zu 170° oder bis zu 200°.

In einer Ausgestaltung kann sich die Trennwand 11 mit der Transporteinrichtung 7 (Rad, Rotor, Scheibe, Stern) drehen und deckt die Behälter B zu jedem Zeitpunkt gegenüber der Transfervorrichtung T ab. Auch hier ist zu erkennen, dass die Trennwand 11 mit dem unteren Ende 11-2 das untere Ende 113 der Behälter B überragt. In einer vorteilhaften Ausgestaltung kann die Trennwand 11 jedoch gegenüber der Transporteinrichtung 7 (Rad, Rotor, Scheibe, Stern) stationär sein und deckt dabei ebenfalls die Behälter B zu jedem Zeitpunkt gegenüber der Transfervorrichtung T ab. Auch hierbei überragt die Trennwand 11 mit dem unteren Ende 11-2 das untere Ende 113 der Behälter B.

Fig. 4 ist eine weitere stark vereinfachte schematische perspektivische Darstellung einer Transfervorrichtung T gemäß einem weiteren Ausführungsbeispiel. Gegenüber den Ausführungsbeispielen der Figuren 2 und 3 ist die Trennwand 11 nun in vertikaler Richtung nach unten länger ausgeführt. In dieser Ausgestaltung kann die Trennwand 11 entweder mit ihrem oberen Ende 11-1 an der Transporteinrichtung 7 bzw. dem Unterteil 7-2 der Transporteinrichtung 7 oder einem stationären Teil der Basis und/oder mit ihrem untere Ende 11-2 am Boden 13 oder der Basis 12 befestigt sein. Soweit die Trennwand 11 mit dem oberen Ende 11-1 an der Transporteinrichtung 7 (bzw. deren Unterteil 7-2) befestigt ist, und sich das Unterteil 7-2 mit den Behältern B,1,2 mitbewegt, könnte sich die Trennwand 11 mit der Transporteinrichtung 7 mitbewegen bzw. mitdrehen. Typischerweise wären in einem solchen Fall eine oder mehrere Kurven oberhalb der Greifer und/oder Greifarme der der Behälterträger 8 angeordnet.

In einer alternativen Ausgestaltung könnte die Trennwand 11 mit einem unteren Ende 11-2 am Boden 13 (Sockel, Aufstellboden o.ä.) und/oder einem oberen Ende an einem stationären Teil der Basis 12 befestigt sein und sich nicht mit der Transporteinrichtung 7 mitdrehen.

In der vorliegenden Darstellung überragt die Trennwand 11 in vertikaler Richtung das untere Ende 113 (Kuppe 5) der Behälter B,1 deutlich. Nur beispielhaft sind hier Vorformling B,1 gezeigt. Ebenso können hier fertige Behälter B,2 gezeigt sein.

In diesem Ausführungsbespiel kann die Basis 12 eine oder mehrere Kurven bzw. Kurvensteuerungen umfassen. Wenn die Kurven fest mit der Basis 12 und/oder dem Boden 13 verbunden sind (stationär) dann kann die Trennwand 11 stationär sein. In einer möglichen Ausgestaltung könnte die Oberkannte 11-1 der Trennwand 11 an einer Unterseite einer Kurve (also am Unterteil 7-2) befestigt sein.

Allgemein könnte an der Oberkante 11-1 der Trennwand 11 kann eine Dichtung vorgesehen sein, die eine relative Bewegung zwischen der Transporteinrichtung 7 (Unterkante des Unterteils 7-2) zulässt, aber ausreichend dicht/undurchlässig gegenüber Schmutz und Mikroorganismen ist.

In den hier gezeigten Ausführungsbeispielen sind lediglich zwei Behälterträger 8 gezeigt. Tatsächlich können eine größere Mehrzahl von Behälterträgern 8 vorgesehen sein, die gleichmäßig um den Umfang der Transporteinrichtung 7 angeordnet sein können. Die Transporteinrichtung 7 kann generell die Form eines Rades bzw. einer Scheibe haben aber auch linear ausgeführt sein. Die Transporteinrichtung 7 kann aber auch wie ein Rotor oder ein Stern ausgestaltet sein. Bei den letzten beiden Ausgestaltungen können sich die Behälterträger 8 an Tragarmen befinden bzw. Tragarme umfassen, die sich sternförmig oder rotorartig vom der Drehachse 9 radial nach außen erstrecken.

Insgesamt zeigen die Figuren 2 bis 4 also Transfervorrichtungen T zum kontaminationsfreien Transport von Behältern B aus einem thermoplastischen Material. Die Transfervorrichtungen T können im Bereich einer Vorrichtung zum Behandeln von Behältern, insbesondere einer Umformmaschine, Z.B. Blasmaschine 10 zur Blasformung von Behältern B eingesetzt werden. Die Transfervorrichtungen T weisen eine auf einer Basis 12 (Säule, Pfosten) beweglich gelagerte Transporteinrichtung 7 (Transportrad) mit mehreren, an ihrem Umfang in Umfangsrichtung verteilt angeordnete Behälterträgern 8 zum Halten und Befördern der Behälter B entlang eines Transportpfades auf. Die Transfervorrichtungen T umfassen jeweils eine Trennwand 11, die sich in horizontaler Richtung entlang eines Transportpfades der Behälter B auf der Transfervorrichtung T und in vertikaler Richtung von oben nach unten von der Transporteinrichtung 7 mindestens bis zum unteren Ende 113 des längsten Behälters B erstreckt, der auf der Transfervorrichtung T befördert wird. Die Trennwand 11 ist zwischen der Basis 12 und den Behältern B angeordnet und sowohl von der Basis 12 als auch von den Behältern B (auf ihrem Weg entlang ihres Transportpfades) beabstandet. Die jeweilige Trennwand 11 ist derart eingerichtet, dass sie in dem von der Trennwand 11 abgedeckten Bereich einen Transport unter sterilen Bedingungen unterstützt, insbesondere verhindert, dass sich Fremdpartikel, Schmutz und/oder Keime von der Transfervorrichtung T lösen und zu den Behältern B gelangen.

Die jeweiligen Trennwände 11 verlaufen in horizontaler Richtung entlang des Transportpfades der Behälter B. In einem besonderen Fall können die Trennwände 11 auch parallel bzw. abschnittweise parallel zum Transportpfad verlaufen. Zudem sind die Trennwände 11 in einer möglichen Ausgestaltung eingerichtet, um sich in einer Transportrichtung der Behälter B (beim Transport) mitzubewegen. In einer anderen Ausgestaltung sind die Trennwände 11 fest mit der Basis 12 und/oder dem Boden 13 bzw. einer Oberfläche des Bodens 13 gekoppelt. In den vorliegenden Ausführungsbeispielen ist die Transfervorrichtung T als Transferrad (bspw. 60, 70) ausgestaltet. Das Transferrad T weist ein auf der Basis 12 um eine Rotationsachse 9 drehbar gelagerte Transporteinrichtung 7 auf, die als Transportrad, Rotor oder Stern ausgestaltet ist. Die Trennwand 11 hat nur beispielhaft eine zylindrische Form, die je nach Art der Transfervorrichtung T einen bestimmten Querschnitt (Form des Querschnitts) der Mantelfläche aufweist. Der Querschnitt kann sich in vertikaler Richtung verändern. Die Trennwand kann die Basis 12 teilweise, bspw. bis zu 170° oder bis zu 200° oder vollständig (360°) umschließen. Die Trennwand 11 kann aus mehreren Gliedern, Segmenten oder Teilen bestehen, die eine geschlossene Abdeckung bilden. Die jeweilige Trennwand 11 ist einigen Ausführungsbeispielen der Figuren 2 und 3 an ihrem oberen Ende 11-1 an einem Umfang der Transfervorrichtung T, gegebenenfalls an einem Umfang der Transporteinrichtung 7 befestigt. Insbesondere ist die jeweilige Trennwand 11 an ihrem oberen Ende 11-1 an einem Unterteil 7-2 (oder auch umlaufende untere Kante) der Transfervorrichtung T oder der Transporteinrichtung 7 befestigt. In einem Ausführungsbeispiel der Figur 2 und 4 kann die Trennwand 11 auch mit einem unteren Ende 11-3 oder einer unteren Kante 11-3 am Boden 13 oder der Basis 12 befestigt sein. Die Basis 12 weist eine Trägerkonstruktion auf, die eine oder mehrere Kurven umfassen kann, die fest mit der Basis und damit auch fest mit dem Boden 13 verbunden sein können. Die Behälterträger 8 sind als Greifer oder Klemmen ausgestaltet können aber auch als Transportdornen oder in anderen Form ausgestaltet sein.

Die Transfervorrichtung T der vorliegenden Offenbarung ist besonders geeignet, um in einer Vorrichtung zum Behandeln von Behältern 10 eingesetzt zu werden, insbesondere in einer Umformmaschine, z.B. Umformmaschine, Z.B. Blasmaschine oder Streckumformmaschine, Z.B. Streckblasmaschine. Diese kann somit mindestens eine Transfervorrichtung T gemäß der vorliegenden Offenbarung umfassen und vorteilhaft eine Vorrichtung zum Beaufschlagen der Behälter mit Sterilisierfluid 43. Vorteilhaft befindet sich die Transfervorrichtung stromabwärts der Sterilisierung der Behälter B.

### Bezugszeichenliste

- 1: Vorformling
- 2: fertiger Behälter
- 3: Mündungsbereich des Vorformlings
- 4: Schaft des Vorformlings
- 5: Kuppe des Vorformlings
- 6: Neckring
- 7: Transporteinrichtung, Transportrad, Rotor
- 7-1: Oberteil Transporteinrichtung bzw. Transportrad
- 7-2: Unterteil Transporteinrichtung bzw. Transportrad
- 8: Behälterträger, Greifer, Aufnahmeeinrichtung für Behälter
- 9: Rotationsachse, Drehachse Transfervorrichtung bzw. Transporteinrichtung
- 10: Vorrichtung zum Behandeln von Behältern, Umformmaschine, Z.B. Blasmaschine
- 11: Trennwand, Abdeckung, umlaufende Wand
- 12: Basis der Transfervorrichtung, Säule, Pfosten, Rohr, Standfuß
- 13: Boden, Aufstellboden, Sockel
- 20: Steuereinheit
- 30: Blaseinrichtung
- 31: Umformstationen
- 32: Umformrad
- 37a, 37b: Gehäusewände
- 40: Vereinzelungsrad, erstes Transferrad, erste Transfervorrichtung
- 40a: Zuführung
- 43: Beaufschlagungseinrichtung für Sterilisierfluid
- 50: Heizvorrichtung/Temperiervorrichtung
- 51: Heizstrecke bzw. Heizeinrichtungen entlang einer Heizstrecke
- 60: Zuführrad, zweites Transferrad, zweite Transfervorrichtung
- 70: Ausgaberad, Abführrad, drittes Transferrad, dritte Transfervorrichtung
- 11-1: Oberes Ende der Abdeckung
- 11-2, 11-3: Unteres Ende der Abdeckung
- 113: Unteres Ende der Behälter B,1 oder B,2
- 300: Drehrichtung des Umformrades der Blaseinrichtung
- 400: Drehrichtung des Vereinzelungsrads
- 500: Umlaufrichtung der Transportkette innerhalb der Heizvorrichtung
- 600: Drehrichtung des Transferrades
- 700: Drehrichtung des Ausgaberades
- B: Behälter allgemein, Vorformlinge 1 oder fertige Behälter 2
- R: Rotationsachse
- ST: Beginn der Sterilisierung (Zuführung von Sterilisierfluid)
- T: Transfervorrichtung (allgemein), Transferrad

## Patentansprüche

1. Transfervorrichtung (T) zum kontaminationsfreien Transport von Behältern (B) aus einem thermoplastischen Material im Bereich einer Vorrichtung zum Behandeln von Behältern, insbesondere einer Umformmaschine, z.B. Streckumformmaschine oder Streckblasmaschine (10) zur Umformung von Behältern (B), wobei die Transfervorrichtung (T) eine auf einer Basis (12) beweglich gelagerte Transporteinrichtung (7) mit mehreren, an ihrem Umfang in Umfangsrichtung verteilt angeordneten Behälterträgern (8) zum Halten und Befördern der Behälter (B) entlang eines Transportpfades aufweist, wobei die Transfervorrichtung (T) eine Trennwand (11) umfasst, die sich in horizontaler Richtung entlang eines Transportpfades der Behälter (B) auf der Transfervorrichtung (T) und in vertikaler Richtung von oben nach unten von der Transporteinrichtung (7) mindestens bis zum unteren Ende (5, 113) des längsten Behälters (B) erstreckt, der auf der Transfervorrichtung (T) befördert wird, wobei die Trennwand (11) zwischen der Basis (12) und den Behältern (B) angeordnet ist und sowohl von der Basis (12) als auch vom Transportpfad beabstandet ist, wobei die Trennwand (11) derart eingerichtet ist, dass sie in dem von der Trennwand (11) abgedeckten Bereich einen Transport der Behälter (B) unter sterilen Bedingungen unterstützt, insbesondere verhindert, dass sich Fremdpartikel, Schmutz, Keime und/oder Mikroorganismen von der Transfervorrichtung (T) lösen und zu den Behältern (B) gelangen.

2. Transfervorrichtung (T) nach Anspruch 1, wobei die Trennwand (11) gegenüber der Transporteinrichtung stationär ist.

3. Transfervorrichtung (T) nach einem der vorstehenden Ansprüche, wobei diese als Transferrad (60, 70) ausgestaltet ist, das eine auf der Basis (12) um eine Rotationsachse (9) drehbar gelagerte Transporteinrichtung (7) aufweist, die als Transportrad, Rotor oder Stern ausgestaltet ist.

4. Transfervorrichtung (T) nach einem der vorstehenden Ansprüche, wobei die Trennwand (11) die Basis (12) mindestens teilweise, insbesondere bis zu 170° und insbesondere bis zu 200° eines vollständigen Umlaufs um die Transfervorrichtung (T) umgibt.

5. Transfervorrichtung (T) nach einem der vorstehenden Ansprüche, wobei die Basis (12) mit dem Boden (13) fest verankert ist und mindestens eine Kurve für eine Kurvensteuerung aufweist, die unterhalb der Transporteinrichtung (7), insbesondere unterhalb der Behälterträger (8) der Transporteinrichtung (7) angeordnet ist.

6. Transfervorrichtung (T) nach einem der vorstehenden Ansprüche, wobei die Trennwand (11) an ihrem oberen Ende (11-1) an einem Umfang der Transfervorrichtung (T), insbesondere an einem Unterteil (7-2) der Transporteinrichtung (7) befestigt ist, wobei sich dort mindestens eine Kurve befindet.

7. Transfervorrichtung (T) nach Anspruch 1, wobei die Trennwand (11) an ihrem oberen Ende (11-1) an einem Umfang der Transfervorrichtung (T), insbesondere der Transporteinrichtung (7) befestigt ist und eingerichtet ist, um sich mit der Transporteinrichtung (7) mitzubewegen.

8. Vorrichtung zum Behandeln von Behältern (10), insbesondere Umformmaschine, z.B. Blasmaschine oder Streckblasmaschine, umfassend: eine Transfervorrichtung (T) nach einem der vorstehenden Ansprüche und eine Vorrichtung zum Beaufschlagen der Behälter mit Sterilisierfluid (43).
